(19) Europäisches Patentamt / European Patent Office / Office européen des brevets

(11) **EP 3 182 369 B1**

(12) **EUROPEAN PATENT SPECIFICATION**

(45) Date of publication and mention of the grant of the patent:
**16.09.2020 Bulletin 2020/38**

(51) Int Cl.:
*G06T 7/00* *(2017.01)*   *G06T 7/593* *(2017.01)*
*H04N 13/00* *(2018.01)*

(21) Application number: **16201289.2**

(22) Date of filing: **30.11.2016**

(54) **STEREO MATCHING METHOD, CONTROLLER AND SYSTEM**

VERFAHREN ZUM STEREOABGLEICH, STEUERGERÄT UND SYSTEM

PROCÉDÉ DE MISE EN CORRESPONDANCE STÉRÉO, CONTRÔLEUR ET SYSTÈME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2015 CN 201510937846**

(43) Date of publication of application:
**21.06.2017 Bulletin 2017/25**

(73) Proprietor: **Ricoh Company, Ltd.**
**Tokyo 143-8555 (JP)**

(72) Inventors:
- **LIU, Yuan**
  **Beijing, 100044 (CN)**
- **LIU, Zhenhua**
  **Beijing, 100044 (CN)**
- **LIU, Dianchao**
  **Beijing, 100044 (CN)**
- **WANG, Gang**
  **Beijing, 100044 (CN)**
- **SHI, Zhongchao**
  **Beijing, 100044 (CN)**

(74) Representative: **SSM Sandmair Patentanwälte Rechtsanwalt Partnerschaft mbB Joseph-Wild-Straße 20 81829 München (DE)**

(56) References cited:

- **XUEQIN XIANG ET AL: "Real-time stereo matching based on fast belief propagation",** MACHINE VISION AND APPLICATIONS, SPRINGER, BERLIN, DE, vol. 23, no. 6, 13 January 2012 (2012-01-13), pages 1219-1227, XP035124882, ISSN: 1432-1769, DOI: 10.1007/S00138-011-0405-1
- **HEUNG-YEUNG SHUM ET AL: "Stereo matching using belief propagation",** IEEE TRANSACTIONS ON PATTERN ANALYSIS AND MACHINE INTELLIGENCE, IEEE COMPUTER SOCIETY, USA, vol. 25, no. 7, July 2003 (2003-07), pages 787-800, XP011097584, ISSN: 0162-8828, DOI: 10.1109/TPAMI.2003.1206509
- **XIAOYAN HU ET AL: "A Quantitative Evaluation of Confidence Measures for Stereo Vision",** IEEE TRANSACTIONS ON PATTERN ANALYSIS AND MACHINE INTELLIGENCE, IEEE COMPUTER SOCIETY, USA, vol. 34, no. 11, November 2012 (2012-11), pages 2121-2133, XP011490748, ISSN: 0162-8828, DOI: 10.1109/TPAMI.2012.46
- **SEHYUNG LEE ET AL: "Robust stereo matching using adaptive random walk with restart algorithm",** IMAGE AND VISION COMPUTING, vol. 37, May 2015 (2015-05), pages 1-11, XP055365109, GUILDFORD, GB ISSN: 0262-8856, DOI: 10.1016/j.imavis.2015.01.003
- **Kuk-Jin Yoon ET AL: "Adaptive support-weight approach for correspondence search",** IEEE Transactions on Pattern Analysis and Machine Intelligence, 2006, pages 650-656, XP055205284, New York DOI: 10.1109/TPAMI.2006.70 Retrieved from the Internet: URL:http://ieeexplore.ieee.org/xpls/abs_all.jsp?arnumber=1597121

**Description**

## BACKGROUND OF THE INVENTION

### 1. Field of the Invention

The present invention generally relates to the field of image processing, and specifically, relates to a stereo matching method, a controller and a system.

### 2. Description of the Related Art

Stereo matching is the most basic technology in the field of image processing. The problem to be resolved by stereo matching is to perform mapping between projecting points in left and right images, which are obtained by photographing a real object point by a binocular video camera, namely, to correctly find out corresponding points in one image from pixels in another image and to obtain disparity values by calculating difference values between image coordinates of a pair of corresponding points.

The study of stereo matching algorithms has been remarkably improved, many stereo matching algorithms were provided, and the accuracy of matching of the algorithms were improved. The stereo matching algorithms may be divided into two kinds of algorithms, i.e., local matching algorithm and global matching algorithm based on a constraint condition.

The local matching algorithm is usually considered for a small area surrounding a matched pixel, and is used for obtaining a disparity value of the matched pixel. The local matching algorithm has a small calculation amount and is easily implemented by hardware.

The global matching algorithm is considered for a scanning line or a whole image, and is used for calculating different similarity metrics in a global range based on different disparity distribution, a minimum metric being an optimal disparity distribution. A global matching method is usually performed in a framework of a global energy function minimization, a corresponding global energy function is defined based on a constraint condition, and a disparity map is obtained by calculating disparity distribution corresponding to a minimum value of the global energy function by an algorithm.

Accordingly, there is a need to keep researching the stereo matching method and improve the accuracy of the stereo matching result.

XUEQIN XIANG ET AL: "Real-time stereo matching based on fast belief propagation" MACHINE VISION AND APPICATIONS, SPRINGER, vol. 23, no. 6, 13 January 2012, pages 1219-1227, XP035124882, ISSN: 1432-1769, DOI: 10.1007/S00138-011-4505-1 discloses a global optimum stereo matching algorithm based on improved believe propagation which generates high quality results while maintaining real-time performance. These results are achieved using a foundation based on hierarchical belief propagation architecture combined with a novel asymmetric occlusion handling model as well a parallel graphical processing.

HEUNG-YEUNG SHUM ET AL: "Stereo matching using belief propagation", IEEE PAMI, vol. 25, no. 7, July 2003, pages 787-800, XP011097584, ISSN: 0162-8828, DOI: 10.1109/TPAMI.2003.1206509 discloses formulation of a stereo matching problem as a Markov network and solving it using Bayesian belief propagation.

XIAOYAN HU ET AL: "A Quantitative Evaluation of Confidence Measures for Stereo Vision", IEEE TRANSACTIONS ON PATTERN ANALYSIS AND MACHINE INTELLEGENCE, IEEE COMPUTER SOCIETY, USA, vol. 34, no. 11, 1 November 2012 (2012-11-01), pages 2121-2133, XP011490748, ISSN: 0162-8828, DOI: 10.1109/TPAMI.2012.46 discloses different types of confidence measures for stereovision.

Sehyung Lee ET AL: "Robust stereo matching using adaptive random walk with restart algorithm", IMAGE AND VISION COMPUTING, vol. 37, 1 May 2015 (2015-05-01), pages 1-11, XP055365109, GUILDFORD, GB ISSN: 0262-8856, DOI: 10.1016/j.imavis.2015.01.003 discloses a robust dense stereo reconstruction algorithm using a random walk with restart. The pixel-wise matching costs are aggregated into superpixels and the modified random walk with restart algorithm updates the matching cost for all possible disparities between the superpixels.

Kuk-Jin Yoon ET AL: "Adaptive support-weight approach for correspondence search", IEEE Transactions on Pattern Analysis and Machine Intelligence, 1 January 2006 (2006-01-01), pages 650-656, XP055205284, New York DOI: 10.1109/TPAMI.2006.70Retrieved from the Internet:URL:http:/ieeexplore.ieee.org/xpls/abs_all.jsp?arnumber=1597121 discloses a new window-based method for correspondence search using varying support weights. The support weights of the pixels are adjusted in a given support window based on colour similarity and geometric proximity to reduce image ambiguity.

## SUMMARY OF THE INVENTION

The invention is defined by the independent claims. The dependent claims relate to preferred embodiments of the invention. Roughly speaking, a belief propagation algorithm may be applied to the global matching algorithm of the stereo matching. As an advantage of the belief propagation algorithm, a distance of message transmission is automatically adjusted based on characteristics of a region, both influence of adjacent pixels on a target pixel and influence of non-adjacent pixels on the target pixel are considered, and it is possible to perform processing for a low-texture region and a depth-discontinuity region. In the low-texture region, a message can be transmitted in a long distance, and in the depth-discontinuity region, the message transmission is immediately stopped. In these methods, usually, coarse-matching is performed using local matching, a pair of correct matched points (seed points) are extracted, global matching processing is performed by the pair of matched points to calculate disparity values of other pixels, and a dense disparity map with a higher accuracy is eventually obtained. The most basic step of this method is calculating a relationship between the pixels, i.e., propagating information of a seed point to another point and performing belief propagation of the information of the seed points. Energy of information propagation may be represented by an energy propagation coefficient. In prior art, calculating matching costs, calculating initial disparity values, and transmitting input message and output message with an adjacent pixel are usually used. The belief propagation is completed in the process of message transmission.

The technology of the present disclosure has an object to improve the conventional belief propagation algorithm and improve the accuracy of the stereo matching.

Specifically, according to an aspect of the present invention, a method for performing stereo matching includes calculating matching costs between pixels of a first image and pixels of a second image; estimating disparity values and corresponding confidence levels of the pixels of one of the first image and the second image serving as a reference image, the confidence level being a likelihood that indicates whether the estimated disparity value of the pixel is correct; calculating, based on a difference degree of a visual feature and a distance in an image coordinate system between two pixels in the reference image, and the confidence levels corresponding to the two pixels, directed energy propagation coefficients between the two pixels; and performing, based on the directed energy propagation coefficients, a belief propagation algorithm to obtain updated disparity values of the pixels.

According to another aspect of the present invention, a system for performing stereo matching includes a photographing apparatus configured to photograph a first image and a second image; and a controller configured to receive the first image and the second image sent by the photographing apparatus; calculate matching costs between pixels of the first image and pixels of the second image; estimate disparity values and corresponding confidence levels of the pixels of one of the first image and the second image serving as a reference image, the confidence level being a likelihood that indicates whether the estimated disparity value of the pixel is correct; calculate, based on a difference degree of a visual feature and a distance in an image coordinate system between two pixels in the reference image, and the confidence levels corresponding to the two pixels, directed energy propagation coefficients between the two pixels; and perform, based on the directed energy propagation coefficients, a belief propagation algorithm to obtain updated disparity values of the pixels.

According to another aspect of the present invention, a controller for performing stereo matching includes a matching cost calculating apparatus configured to calculate matching costs between pixels of a first image and pixels of a second image; an estimating apparatus configured to estimate disparity values and corresponding confidence levels of the pixels of one of the first image and the second image serving as a reference image, the confidence level being a likelihood that indicates whether the estimated disparity value of the pixel is correct; an energy propagation coefficient calculating apparatus configured to calculate, based on a difference degree of a visual feature and a distance in an image coordinate system between two pixels in the reference image, and the confidence levels corresponding to the two pixels, directed energy propagation coefficients between the two pixels; and a disparity value obtaining apparatus configured to perform, based on the directed energy propagation coefficients, a belief propagation algorithm to obtain updated disparity values of the pixels.

## BRIEF DESCRIPTION OF THE DRAWINGS

FIG. 1 is a schematic drawing illustrating a scenario of system hardware where a stereo matching algorithm of an embodiment of the present invention is applied;

FIG. 2 is a flowchart illustrating a stereo matching method according to an embodiment of the present invention;

FIG. 3A is a schematic drawing illustrating propagation of a belief propagation algorithm;

FIG. 3B is a schematic drawing illustrating a belief propagation algorithm based on a confidence level of a seed point according to the embodiment of the present invention;

FIG. 3C is a schematic drawing illustrating a belief propagation algorithm, in which propagation between two pixels is performed in an asymmetrical manner, according to the embodiment of the present invention;

FIG. 4 is a schematic drawing illustrating a stereo matching process of a belief propagation algorithm based on a confidence level according to an embodiment of the present invention; and

FIG. 5 is a block diagram illustrating a stereo matching controller according to an embodiment of the present invention.

## DETAILED DESCRIPTION OF THE PREFERRED EMBODIMENTS

In the following, specific embodiments of the present invention will be described in detail with reference to the accompanying drawings. Although the present invention will be described with reference to the specific embodiments, the present invention is not limited to the embodiments but only by the appended claims. Furthermore, the present invention includes various modifications, amendments or equivalents that are made without departing from the scope of the present invention. It should be noted that, steps in the method may be implemented by any functional blocks or functional layouts, and the functional blocks or the functional layouts may be implemented as physical entities, logical entities, or combination thereof.

In the following, the present invention will be described in detail with reference to the accompanying drawings and the specific embodiments, so as to facilitate the understanding of the present invention.

It should be noted that, the examples that will be described below are just specific examples, and embodiments of the present invention are not limited to specific steps, values, conditions, data and orders below. A person skilled in the art may construct another embodiment, which is not mentioned in the specification, by reading the specification and applying concepts of the present invention.

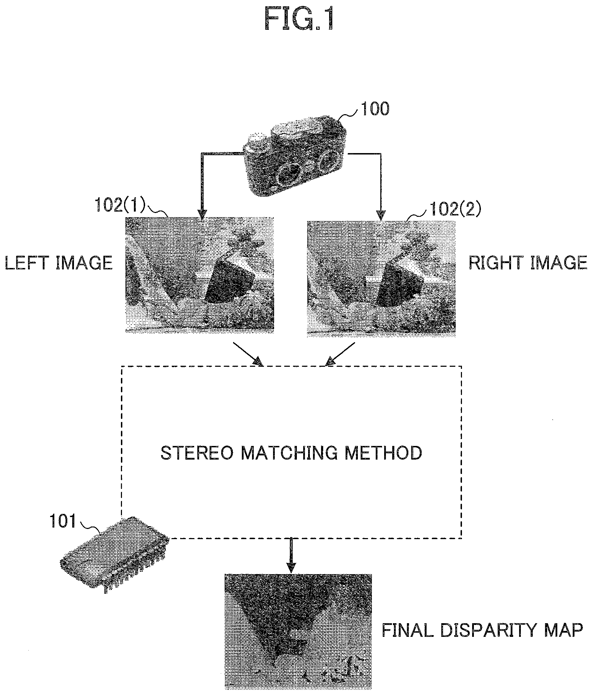

FIG. 1 is a schematic drawing illustrating a scenario of system hardware where a stereo matching algorithm of an embodiment of the present invention is applied.

The stereo matching system shown in FIG. 1 includes a photographing apparatus 100 and a controller 101, the photographing apparatus 100 photographs a first image 102(1) and a second image 102(2), and the controller 101 performs a stereo matching algorithm according to an embodiment of the present invention. The stereo matching algorithm may include receiving the first image and the second image sent by the photographing apparatus 101; calculating matching costs between pixels of the first image and pixels of the second image; estimating disparity values and corresponding confidence levels of the pixels of one of the first image and the second image serving as a reference image, the confidence level being a likelihood that indicates whether the estimated disparity value of the pixel is correct; calculating, based on a difference degree of a visual feature and a distance in an image coordinate system between two pixels in the reference image, and the confidence levels corresponding to the two pixels, directed energy propagation coefficients between the two pixels; and performing, based on the directed energy propagation coefficients, a belief propagation algorithm to obtain updated disparity values of the pixels. Accordingly, it is possible to construct a final disparity map by updating the disparity values.

It should be noted that, when the photographing apparatus is a binocular camera, a left image and a right image are obtained by photographing as the first and second images, respectively. In the following description of the embodiment, an example of the left and right images will be described, however the first and second images are not limited to the left and right images. In actuality, with the development of science and technology, there is a possibility that a multi-dimensional camera appears, accordingly the stereo matching technology of the present disclosure may also be applied to multi-dimensional stereo matching.

It should be noted that, the controller 101 may include a general-purpose processor, a digital signal processor (DSP), an ASIC, a field programmable gate array (FPGA) or another programmable logic device (PLD), a discrete gate or transistor logic, discrete hardware components or any other combination for executing the functions to realize the logic blocks, modules and circuits of the embodiments. The controller 101 may be a single chip, a chipset, an integrated circuit, a single-chip microcomputer or the like. The general-purpose processor is a micro-processor, and alternatively, the processor may be any processors, controllers, micro-controllers or state machines that can be obtained commercially. The controller may also be the combination of the computer equipment, such as the combination of a DSP and a micro-processor, the combination of plural micro-processors, or the combination of a DSP and plural micro-processors. The controller may further include a memory (not shown). The memory may store at least one computer-executable instruction to be executed by the controller to implement functions and/or steps according to embodiments of the present invention. The memory may further temporarily or permanently store various data and instructions.

It should be noted that, the hardware scenario shown in FIG. 1 is just an example and the present invention is not limited to this example, and any appropriate hardware scenario may also be constructed based on the description of the present disclosure.

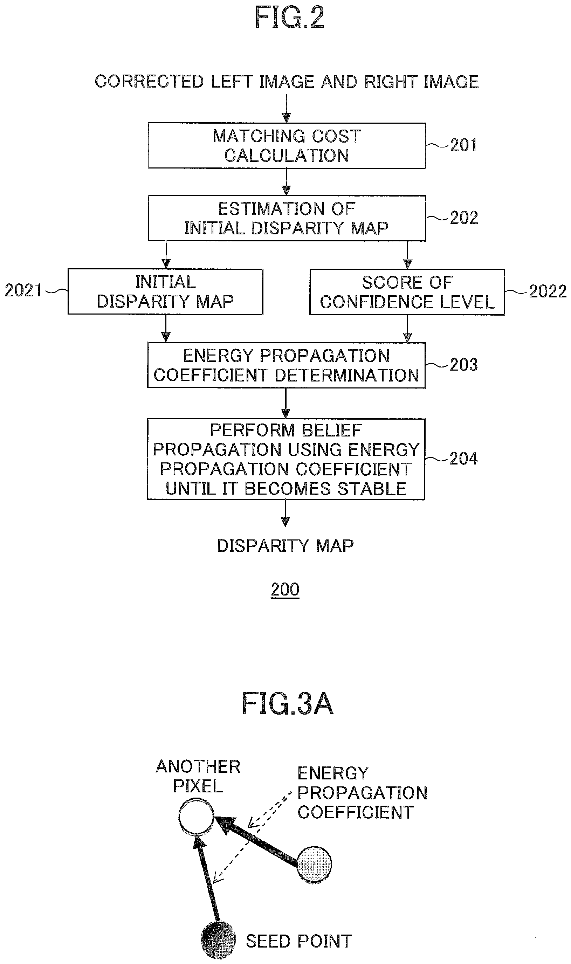

FIG. 2 is a flowchart illustrating a stereo matching method 200 according to an embodiment of the present invention.

The stereo matching method 200 according to the embodiment includes step 201, calculating matching costs between pixels of a first image and pixels of a second image; step 202, estimating disparity values 2021 and corresponding confidence levels 2022 of the pixels of one of the first image and the second image serving as a reference image, the confidence level 2022 being a likelihood that indicates whether the estimated disparity value of the pixel is correct; step 203, calculating, based on a difference degree of a visual feature and a distance in an image coordinate system between two pixels in the reference image, and the confidence levels corresponding to the two pixels, directed energy propagation coefficients between the two pixels; and step 204, performing, based on the directed energy propagation coefficients, a belief propagation algorithm to obtain updated disparity values of the pixels.

In step 201, in order to calculate the matching costs between the pixels of the first image and the pixels of the second image more accurately, epipolar rectification may be performed for the first image such as the left image and the second image such as the right image, so that the left image and the right image can be located on the same epipolar line. The matching costs may be calculated using any one of known matching cost functions, such as Sum of Absolute Differences (SAD), Sum of Squared Differences (SSD), Zeromean Sum of Absolute Differences (ZSAD), Zeromean Sum of Squared Differences (ZSSD), Birchfield and Tomasi (BT), Mutual Information (MI), Census or the like. In order to improve the accuracy of an initial disparity map, a plurality of kinds of matching cost functions may be further combined to obtain more accurate matching cost function. Furthermore, as another common method for improving the accuracy, windows may be overlapped in a certain window size to enhance the reliability of the matching costs.

In step 202, the disparity values and the corresponding confidence levels of the pixels in the reference image of the left image and the right image are estimated using the obtained matching costs. Here, one of the left image and the right image is selected as the reference image, and the disparity values and the corresponding confidence levels of the pixels in the reference image are calculated. Furthermore, here, only initial coarse disparity values may be obtained; and in order to improve calculation efficiency rather than considering the accuracy, a simple and effective calculation method such as a winner-take-all (WTA) algorithm may be used. According to the invention, scores of the confidence levels corresponding to the initial disparity values are obtained while obtaining the initial disparity values. The confidence level is a likelihood that indicates whether the estimated disparity value of the pixel is correct. It should be noted that, applications of the confidence level in the stereo matching may refer to the document X.Hu, P.Mordohai, A quantitative evaluation of confidence measures for stereo vision, in PAMI 34 (2012), 2121-2133. In the document, a plurality of algorithms for calculating the confidence level are provided. According to the invention, the calculation of the confidence levels is performed using an algorithm based on a rule.

The algorithm based on the rule includes extracting, based on each pixel and adjacent pixels of the pixel, confidence features of a curve of the matching costs; voting on the pixels, wherein $f_{in}$ is an n-th confidence feature of the pixel i, the greater a value of $f_{in}$ is, the higher the confidence level of the initially estimated disparity value of the pixel i shown on the n-th confidence feature is, and the pixel i is voted for when the value of $f_{in}$ is greater than a predetermined threshold; and obtaining the total votes $\sum_n f_{in}$ of the pixel i serving as a score of the confidence level of the initially estimated disparity value of the pixel i. confidence features can be obtained. A learning prediction algorithm may include collecting a training set including a plurality of samples, each of the samples including a pair of matched pixels and correct disparity values of the matched pixels, each of the samples further including a positive-negative-tag that indicates whether the estimated disparity value obtained by a winner-take-all (WTA) algorithm is correct; and performing, using a machine learning algorithm based on confidence features of a curve of the matching costs, learning of a classifier to predict whether the estimated disparity value is reliable.

It should be noted that, the method for calculating the estimated disparity values and the corresponding confidence levels is not limited the above method, and any other known methods may be used within the limitations defined by the claims.

In the embodiment of the present invention, the reason for using the pixel serving as a unit to estimate the initial disparity values, calculate the confidence levels and the subsequent energy propagation coefficients, and construct a propagation model is that Fineness is considered, namely, fine disparity values can be obtained by using the pixels. However, in a case of putting importance on speed rather than fineness, an image block larger than the pixel, such as a super-pixel block having a same or similar visual feature (color/grayscale) may also be used as a unit.

In this way, directed energy propagation coefficients between two pixels may be calculated based on a difference degree of a visual feature and a distance in an image coordinate system between the two pixels in the reference image, and the confidence levels corresponding to the two pixels. Accordingly, more accurate energy propagation coefficients are obtained based on the confidence levels (i.e., likelihoods that indicates whether the estimated disparity values are correct) of the estimated disparity values of the pixels, and a more accurate belief propagation model and more accurate disparity values are obtained.

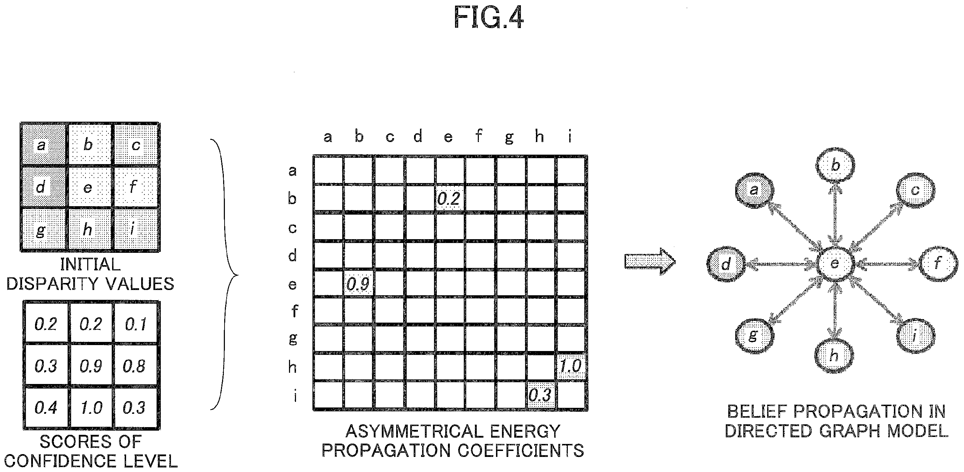

In the following, the principle of calculating the directed energy propagation coefficients between the two pixels based on the difference degree of the visual feature and the distance in the image coordinate system between the two pixels in the reference image, and the confidence levels corresponding to the two pixels in step 203 will be described with reference to FIGs. 3A to 3C and FIG. 4.

FIG. 3A is a schematic drawing illustrating propagation of a belief propagation algorithm.

A belief propagation algorithm usually performs coarse-matching using local matching, a pair of correct matched points (seed points) are extracted, global matching processing is performed by the pair of matched points to calculate disparity values of other pixels, and a dense disparity map with a higher accuracy is eventually obtained. The most basic step of this method is calculating a relationship between the pixels, i.e., propagating information of a seed point to another point and performing belief propagation of the information of the seed points. As shown in FIG. 3A, the energy propagation coefficient represents amount of energy of information propagation from a seed point to another pixel in the belief propagation algorithm, i.e., amount of information energy propagated from the seed point to the other pixel.

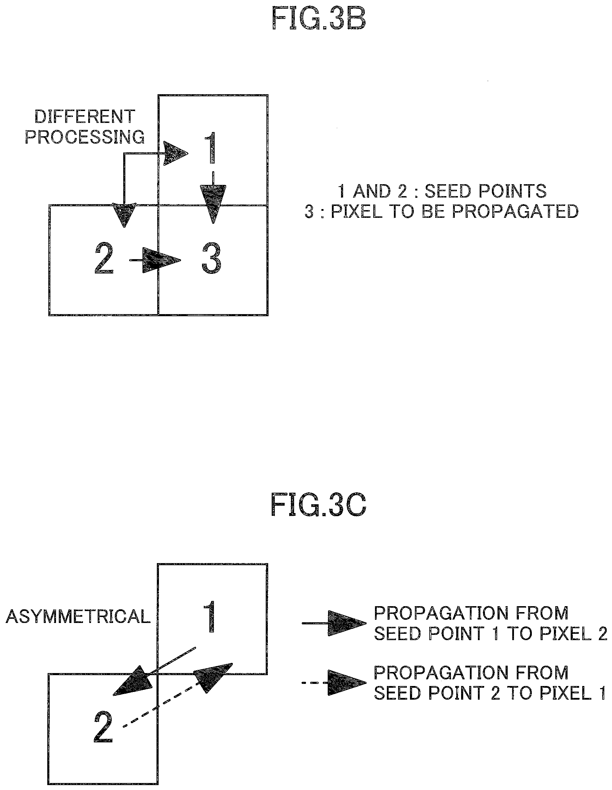

FIG. 3B is a schematic drawing illustrating a belief propagation algorithm based on a confidence level of a seed point according to the embodiment of the present invention.

Compared to the conventional belief propagation algorithm in which seed points are similarly processed, in the embodiment of the present invention, the belief propagation algorithm may be performed by differentially processing different seed points based on the corresponding confidence levels of the different seed points. As shown in FIG. 3B, the energy propagation coefficient from seed point 1 to pixel 3 is different from the energy propagation coefficient from seed point 2 to pixel 3, since the confidence level of seed point 1 is different from the confidence level of the seed point 2.

FIG. 3C is a schematic drawing illustrating a belief propagation algorithm, in which propagation between two pixels is performed in an asymmetrical manner, according to the embodiment of the present invention.

Compared to the conventional belief propagation algorithm in which energy propagation coefficients between two pixels are symmetrical, in the embodiment of the present invention, the energy propagation coefficients between two pixels may be asymmetrical because of the different confidence levels of the two pixels. As shown in FIG. 3C, the energy propagation coefficient from seed point 1 to pixel 2 may be different from the energy propagation coefficient from seed point 2 to pixel 1, since the confidence levels of the seed points 1 and 2 are different. Accordingly, in the embodiment of the present invention, directed energy propagation coefficients means that the energy propagation coefficients may be different due to the different propagation directions (for example, the direction from pixel 1 to pixel 2 and the direction from pixel 2 to pixel 1 are different).

FIG. 4 is a schematic drawing illustrating a stereo matching process of a belief propagation algorithm based on a confidence level according to an embodiment of the present invention.

As shown in FIG. 4, a, b, c, ..., i represent nine pixels, in the conventional belief propagation algorithm, the energy propagation coefficient from pixel b to pixel e (b->e) is the same as the energy propagation coefficient from pixel e to pixel b (e->b). However, in the embodiment of the present invention, the confidence levels of pixels b and e are different when estimating the initial disparity values, thus the energy propagation coefficients of b->e and e->b may also be different. Accordingly, the different energy propagation coefficients are loaded into a directed graph model to obtain final disparity values.

Specifically, in step 203, the directed energy propagation coefficients between the two pixels are calculated based on the difference degree of the visual feature and the distance in the image coordinate system between the two pixels in the reference image, and the confidence levels corresponding to the two pixels. The basic rule may be as follows. The smaller the difference degree of the visual feature between the two pixels is, the greater the energy propagation coefficients are; the shorter the distance between the two pixels is, the greater the energy propagation coefficients are; and the higher the confidence levels corresponding to the two pixels are, the greater the energy propagation coefficients are. In the following, a specific formula for representing a relationship among the energy propagation coefficients, the difference degree of the visual feature, the distance in the image coordinate system and the confidence levels corresponding to the two pixels are shown. However, the present invention is not limited to the specific formula, and any other formulas that satisfy the above basic rule may be used.

In an example, the energy propagation coefficient is calculated based on a visual feature, a spatial position and the obtained score of the confidence level of the image pixel. Here, the visual feature may include visual information such as grayscale, color and the like, and the spatial position may include a distance metric such as a Euclidean distance and the like. In an example, $w_{ij}$ represents an initial energy propagation coefficient between the pixel i and the pixel j, and may be defined as

$$w_{ij} = \exp\left(-\left(\frac{\Delta c(i,j)}{\lambda_c} + \frac{\Delta g(i,j)}{\lambda_g}\right)\right)$$

Where $\Delta c(i,j) = \|I(i) - I(j)\|$ and $\Delta g(i,j) = \|i - j\|$. reprents the difference degree of color/grayscale and a Euclidean distance in the image coordinate system between the pixel i and the pixel j, respectively. The difference degree reflects similarity of the visual feature between the two pixels; and the smaller the difference degree is, the greater the similarity is. $\lambda_c$ and $\lambda_g$ are two regularization parameters.

Furthermore, $r_i$ represents a score of the confidence level of the pixel i, and represents the likelihood that indicates whether the estimated disparity value of the pixel is correct. Namely, the higher the score of the confidence level is, the higher the likelihood that indicates whether the estimated disparity value is correct is. The energy propagation coefficient $p_{ij}$ may be as a form of an inner product as follows.

$$p_{ij} = <r_i, w_{ij}>$$

Where $<r_i, w_{ij}>$ represents an inner product of the score of the confidence level $r_i$ and the initial energy propagation coefficient $w_{ij}$.

That is to say, in the embodiment, the energy propagation coefficients, the scores of the confidence levels of the initial disparity values of the pixels are considered. Furthermore, the scores of the confidence levels of the pixels of initial propagation are considered, accordingly the energy propagation coefficient from the pixel of the initial propagation to another pixel and the energy propagation coefficient from the other pixel to the pixel of the initial propagation may be different and asymmetrical; thus it may be considered that the energy propagation coefficients have a direction.

Additionally, the initial disparity values and the corresponding scores of the confidence levels can be used, accordingly all of the pixels can be used as seed points (compared to the conventional technology in which only a part of pixels can be used as seed points). Furthermore, the influence of the initial disparity values and the score of the confidence levels on the energy propagation coefficients are considered; thus more accurate energy propagation coefficients can be obtained and more accurate disparity values and a stereo matching result can be obtained.

It should be noted that, the above specific calculation formula of the energy propagation coefficient is just an example; and in fact, another formula may be used as long as the energy propagation coefficients are calculated based on the scores of the confidence levels of the initial disparity values of the pixels such that the higher the score of the confidence level is, the greater the energy propagation coefficient propagated from the pixel is.

In step 204, the belief propagation algorithm is performed based on the directed energy propagation coefficients to obtain the updated disparity values of the pixels.

Specifically, first, a directed graph model G=(V,E) is constructed, where V are nodes of the graph model, i.e., the pixels of the reference image, and a weight of a side between the node in the graph model $E \subseteq V \times V$ is represented by the energy propagation coefficient $p_{ij}$. Each of the sides of the graph model is a directed pair of points [i,j], which represents a directed side from pixel i to pixel j. Here, selfloop is not considered, i.e., all of the nodes satisfy $v \in V$, $[i,i] \notin E$. It should be noted that, the directed graph model is used for reflecting the propagation relationship with a direction and a weight between the nodes, and another type of model may also be used as long as such a relationship can be reflected.

And then, the belief propagation algorithm is performed for the graph model to obtain the updated disparity values of the pixels.

Specifically, a random walk model having a unique stable distribution such as a teleporting random walk model may be defined based on a constructed directed graph model and an energy propagation coefficient matrix. $\Pi$ represents a diagonal matrix, diagonal elements of the diagonal matrix are the stable distribution of the random walk model, and a propagation likelihood matrix $\Theta$ is calculated according to $\Theta = (\Pi^{1/2}P\Pi^{-1/2} + \Pi^{-1/2}P\Pi^{1/2})/2$, where P is the energy propagation coefficient matrix. When y(i) represents a calculation function of the estimated disparity value of pixel i, the final disparity calculation function of the pixel is $f(i) = (I - \alpha\Theta^{-1}y(i)$, where $\alpha$ is a parameter whose range is [0,1]. It should be noted that, f(i) and y(i) may be a matrix form, i.e., a vertical vector matrix.

The above random walk model may refer to, for example, the document D. Zhou, J. Huang, and B. Scholkopf, Learning from Labeled and Unlabeled Data on a Directed Graph, in ICML, 2005. However, another model other than the random walk model may also be used in the graph model to perform the belief propagation algorithm.

From the above, compared to the conventional algorithm in which seed points are separately detected, in the stereo matching algorithm using the scores of the confidence levels, the belief propagation may be performed based on the disparity values of all of the pixels and the confidence levels. If the initially estimated disparity values of a pair of pixels have relatively high scores of the confidence levels, it means that the likelihood that indicates whether the pair of the pixels are a correct matching-pair is high, and the updated disparity values of other pixels are easily affected by the pair of the pixels. Accordingly, by the stereo matching method of the embodiment of the present invention, influence of erroneous propagation from unreliable pixels can be reduced, and more accurate disparity values can be obtained. Thus, a more accurate disparity map can be easily obtained by using the improved global stereo matching algorithm according to the embodiment of the present invention.

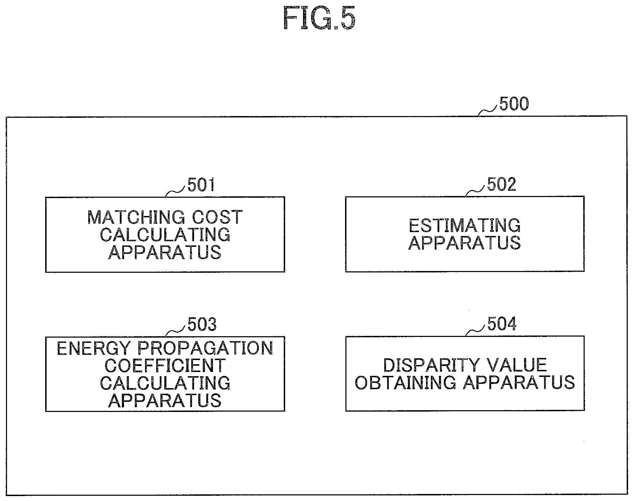

FIG. 5 is a block diagram illustrating a stereo matching controller 500 according to an embodiment of the present invention.

The stereo matching controller 500 shown in FIG. 5 includes a matching cost calculating apparatus 501 configured to calculate matching costs between pixels of a first image and pixels of a second image; an estimating apparatus 502 configured to estimate disparity values and corresponding confidence levels of the pixels of one of the first image and the second image serving as a reference image, the confidence level being a likelihood that indicates whether the estimated disparity value of the pixel is correct; an energy propagation coefficient calculating apparatus 503 configured to calculate, based on a difference degree of a visual feature and a distance in an image coordinate system between two pixels in the reference image, and the confidence levels corresponding to the two pixels, directed energy propagation coefficients between the two pixels; and a disparity value obtaining apparatus 504 configured to perform, based on the directed energy propagation coefficients, a belief propagation algorithm to obtain updated disparity values of the pixels.

In order to calculate the matching costs between the pixels of the first image and the pixels of the second image more accurately, epipolar rectification may be performed for the first image such as the left image and the second image such as the right image, so that the left image and the right image can be located on the same epipolar line. The matching costs may be calculated using any one of known matching cost function, such as Sum of Absolute Differences (SAD), Sum of Squared Differences (SSD), Zeromean Sum of Absolute Differences (ZSAD), Zeromean Sum of Squared Differences (ZSSD), Birchfield and Tomasi (BT), Mutual Information (MI), Census or the like. In order to improve the accuracy of an initial disparity map, a plurality of kinds of matching cost functions may be further combined to obtain a more accurate matching cost function. Furthermore, as another common method for improving the accuracy, windows may be overlapped in a certain window size to enhance the reliability of the matching costs.

Here, one of the left image and the right image is selected as the reference image, and the disparity values and the corresponding confidence levels of the pixels in the reference image are calculated. Furthermore, here, only initial coarse disparity values may be obtained; and in order to improve calculation efficiency rather than considering the accuracy, a simple and effective calculation method such as a winner-take-all (WTA) algorithm may be used.

Preferably, scores of the confidence levels corresponding to the initial disparity values may be obtained while obtaining the initial disparity values. The confidence level may be a likelihood that indicates whether the estimated disparity value of the pixel is correct. For example, the calculation of the confidence levels may be performed using an algorithm based on a rule or a learning prediction algorithm.

The algorithm based on the rule may include extracting, based on each pixel and adjacent pixels of the pixel, confidence features of a curve of the matching costs; voting on the pixels, wherein $f_{in}$ is an n-th confidence feature of the pixel i, the greater a value of $f_{in}$ is, the higher the confidence level of the initially estimated disparity value of the pixel i shown on the n-th confidence feature is, and the pixel i is voted on when the value of $f_{in}$ is greater than a predetermined threshold; and obtaining the total votes $\sum_n f_{in}$ of the pixel i serving as a score of the confidence level of the initially estimated disparity value of the pixel i. The learning prediction algorithm may include collecting a training set including a plurality of samples, each of the samples including a pair of matched pixels and correct disparity values of the matched pixels, each of the samples further including a positive-negative-tag that indicates whether the estimated disparity value obtained by a winner-take-all (WTA) algorithm is correct; and performing, using a machine learning algorithm based on confidence features of a curve of the matching costs, learning of a classifier to predict whether the estimated disparity value is reliable.

It should be noted that, the method for calculating the estimated disparity values and the corresponding confidence levels is not limited to the above method, and any other known methods may be used.

In this way, directed energy propagation coefficients between two pixels may be calculated based on a difference degree of a visual feature and a distance in an image coordinate system between the two pixels in the reference image, and the confidence levels corresponding to the two pixels. Accordingly, more accurate energy propagation coefficients are obtained based on the confidence levels (i.e., likelihoods that indicate whether the estimated disparity values are correct) of the estimated disparity values of the pixels, and a more accurate belief propagation model and more accurate disparity values are obtained.

It should be noted that, the above specific embodiments are just examples and the present invention is not limited to these embodiments but by the appended claims. Furthermore, the specific content of the present specification is only for description and understanding rather than limitation, and the present invention is limited only by the invention as defined by the appended claims.

The block diagrams of the units, apparatuses, devices and system are just examples, the connection, placement and configuration illustrated in the block diagrams related to the present invention are not limited to these examples, and the units, apparatuses, devices and system may be connected, placed or configured in any way compatible with the invention as defined by the appended claims.

The steps of the above method may be performed by any appropriate means that can perform the corresponding functions. The means may include any components and/or modules of hardware and/or software, and include but not be limited to a circuit, a dedicated application-specific integrated circuit (ASIC) or a processor.

The present invention may use a general-purpose processor, a digital signal processor (DSP), an ASIC, a field programmable gate array (FPGA) or other programmable logic device (PLD), a discrete gate or transistor logic, discrete hardware components or any other combination for executing the functions to realize the logic blocks, modules and circuits of the embodiments. The general-purpose processor is a micro-processor, and alternatively, the processor may be any processors, controllers, micro-controllers or state machines that can be obtained commercially. The processor may also be the combination of the computer equipment, such as the combination of a DSP and a micro-processor, the combination of plural micro-processors, or the combination of a DSP and plural micro-processors.

The steps of the method according to the present invention may be incorporated in the hardware, software modules executed by a processor or the combination of these two directly. The software modules may be stored in a recording medium with any shape. The examples of the recording medium includes a random access memory (RAM), a read-only memory (ROM), a flash memory, an EPROM memory, an EEPROM memory, a register, a hard disk drive, a removable disk, a CD-ROM, etc. The recording medium may be linked to a processor so that the processor reads information from the recording medium or writes information into the recording medium. Alternatively, the recording medium and the processor may also be a whole apparatus. The software module may be a single command or many commands, and may be distributed in several code segments, different programs or plural recording media.

Steps of the above method may be performed in time order, however the performing sequence is not limited to the time order. Any steps may be performed in parallel or independently within the limits defined by the invention.

The functions may be realized by hardware, software, firmware or any combination thereof. When the function is implemented by software, the function may be stored in a computer-readable medium as one or more commands. The recording medium may be any real medium that can be accessed by a computer. Such a computer-readable medium includes a RAM, a ROM, an EEPROM, a CD-ROM or other laser discs, a magnetic disk or other magnetic memory, or any other real media that carry or store commands, data or program codes and are accessed by the computer. Such disk and disc include a CD, a laser disc, an optical disc, a DVD disc, a floppy disk and a blue-ray disc, and the disk usually reproduces data and the disc reproduces data by a laser.

Thus, the operations may be performed by a computer program product. For example, such computer program product may be a tangible medium where computer-readable commands are stored (or coded), and the commands may be executed by one or more processors to perform the operation. The computer program product may include packaging material.

The software or commands may also be transmitted by a transmission medium. For example, a coaxial cable, an optical cable, a twisted cable, a digital subscriber line (DSL), or a transmission medium of the wireless technology of infrared, wireless or microwave may be used to transmit the software from a website, a server or another remote source.

Additionally, the modules and/or other appropriate means of the method or technology may be obtained from a user terminal and/or base station, or by other methods. For example, such equipment may be connected to a server so as to perform the transmission of the means of the above method. Alternatively, the methods may be provided via a storage unit (for example, a physical storage medium such as a RAM, a ROM, a CD or a floppy disc), so that the user terminal and/or the base station can obtain the methods when it is connected to the equipment. Furthermore, any other appropriate technology may be provided to the equipment by the method.

The present specification includes other examples and implementations within the limits of the invention as defined by the appended claims. . For example, the above functions may be implemented by a processor, hardware, software, firmware, hard-wire or any combination thereof. The features for implementing the functions may be located at any physical position where which is distributed to each position physically.

## Claims

1.　A method (200) for performing stereo matching, the method comprising:

calculating (201) matching costs between pixels of a first image and pixels of a second image;

estimating (202) initial disparity values (2021) and corresponding scores of confidence levels (2022) of the pixels of one of the first image and the second image serving as a reference image, the score $r_i$ of the confidence level of pixel i being a total confidence level that indicates whether the estimated initial disparity value of the pixel i is correct;

calculating (203), based on a difference degree of a visual feature and a distance in an image coordinate system between two pixels in the reference image, and based on the scores of the confidence levels corresponding to the two pixels, directed energy propagation coefficients between the two pixels; and

performing (204), based on the directed energy propagation coefficients, a belief propagation algorithm to obtain updated disparity values of the pixels,

wherein, for each pixel of said two pixels, the directed energy propagation coefficient to the other pixel of said two pixels represents an amount of energy of information propagated from said pixel to the other pixel when performing said belief propagation algorithm, whereby said belief propagation between said two pixels may be performed in an asymmetrical manner,

wherein estimating (202) the initial disparity values and the corresponding scores of the confidence levels of the pixels of one of the first image and the second image serving as the reference image includes

selecting, based on the calculated matching costs, points with an optimal matching cost in a certain range serving as corresponding matching points;

estimating initial disparity values of the matching points; and

calculating the corresponding scores of the confidence levels using an algorithm based on a rule,

**characterized in that**
the algorithm based on the rule includes obtaining said scores of the confidence levels corresponding to said initial estimates for the said disparity values by:

  extracting, based on each pixel and adjacent pixels of the pixel, confidence features of a curve of the matching costs;
  voting on the pixels, wherein $f_{in}$ is an n-th confidence feature of the pixel i, the greater a value of $f_{in}$ is, the higher the confidence level of the initially estimated disparity value of the pixel i shown on the n-th confidence feature is, and the pixel i is voted for when the value of $f_{in}$ is greater than a predetermined threshold; and
  obtaining the total votes $\sum_n f_{in}$ of the pixel i serving as said score $r_i$ of the confidence level of the initially estimated disparity value of the pixel i.

2. The method (200) for performing stereo matching according to claim 1,
wherein calculating (203), based on the difference degree of the visual feature and the distance in the image coordinate system between the two pixels in the reference image, and the confidence levels corresponding to the two pixels, the directed energy propagation coefficients between the two pixels includes
for each two pixels in the reference image, calculating a difference value of the visual feature and the distance in the reference image between the two pixels; and
calculating, based on the difference degree of the visual feature and the distance in the image coordinate system between the two pixels, and the confidence levels of the pixels, the energy propagation coefficient from one pixel to another pixel, and the energy propagation coefficient from the other pixel to the one pixel.

3. The method (200) for performing stereo matching according to claim 1,
wherein performing (204), based on the directed energy propagation coefficients, the belief propagation algorithm to obtain the updated disparity values of the pixels includes
constructing a directed graph model where nodes are the pixels in the reference image and weights of directed connections between the nodes are the energy propagation coefficients, so that a propagation likelihood matrix is constructed;
defining, based on the propagation likelihood matrix, a random walk model having a unique stable distribution;
calculating, based on a diagonal matrix where diagonal elements are the stable distribution of the random walk model, the propagation likelihood matrix; and
obtaining, based on the calculated propagation likelihood matrix and the estimated disparity values, a final disparity calculation function, so that the updated disparity values are obtained.

4. The method (200) for performing stereo matching according to claim 3, wherein $w_{ij}$ represents an initial energy propagation coefficient between a pixel i and a pixel j,

$$w_{ij} = \exp\left(-\left(\frac{\Delta c(i,j)}{\lambda_c} + \frac{\Delta g(i,j)}{\lambda_g}\right)\right)$$

where $\Delta c(i,j) = \|I(i) - I(j)\|$ and $\Delta g(i,j) = \|i - j\|$ reprent the difference degree of the visual feature and the distance in the image coordinate system between the pixel i and the pixel j, respectively, and $\lambda_c$ and $\lambda_g$ are two regularization parameters, and
$r_i$ represents a score of the confidence level of the pixel i, the higher the score of the confidence level is, the higher the likelihood that indicates whether the estimated disparity value is correct is, and the energy propagation coefficient $p_{ij}$ is represented by $p_{ij}=\langle r_i,w_{ij}\rangle$, where $\langle r_i,w_{ij}\rangle$ represents an inner product of the score of the confidence level $r_i$ and the initial energy propagation coefficient $w_{ij}$.

5. The method (200) for performing stereo matching according to claim 3, wherein the propagation likelihood matrix $\Theta$ is calculated based on the diagonal matrix $\Pi$ where diagonal elements are the stable distribution of the random walk model,

$$\Theta = \left(\Pi^{1/2}P\Pi^{-1/2} + \Pi^{-1/2}P\Pi^{1/2}\right)/2$$

where P is an energy propagation coefficient matrix,
when y represents the estimated disparity value, the final disparity calculation function is $f = (I - \alpha\Theta)^{-1}y$, where $\alpha$ is a parameter whose range is [0,1].

6. A controller (101) for performing stereo matching, the controller (101) comprising:

a matching cost calculating apparatus configured to calculate matching costs between pixels of a first image and pixels of a second image;

an estimating apparatus configured to estimate initial disparity values and corresponding scores of the confidence levels of the pixels of one of the first image and the second image serving as a reference image, the score $r_i$ of the confidence level being a total confidence level that indicates whether the estimated initial disparity value of the pixel i is correct;

an energy propagation coefficient calculating apparatus configured to calculate, based on a difference degree of a visual feature and a distance in an image coordinate system between two pixels in the reference image, and the scores of the confidence levels corresponding to the two pixels, directed energy propagation coefficients between the two pixels; and

a disparity value obtaining apparatus configured to perform, based on the directed energy propagation coefficients, a belief propagation algorithm to obtain updated disparity values of the pixels,

wherein, for each pixel of said two pixels, the directed energy propagation coefficient to the other pixel of said two pixels represents an amount of energy of information propagated from said pixel to the other pixel when performing said belief propagation algorithm, whereby said belief propagation between said two pixels may be performed in an asymmetrical manner,

wherein estimating (202) the initial disparity values and the corresponding scores of the confidence levels of the pixels of one of the first image and the second image serving as the reference image includes

selecting, based on the calculated matching costs, points with an optimal matching cost in a certain range serving as corresponding matching points;

estimating initial disparity values of the matching points; and

calculating the corresponding scores of the confidence levels using an algorithm based on a rule, **characterized in that**

the algorithm based on the rule includes obtaining said scores of the confidence levels corresponding to said initial estimates for said disparity values by:

extracting, based on each pixel and adjacent pixels of the pixel, confidence features of a curve of the matching costs;

voting on the pixels, wherein $f_{in}$ is an n-th confidence feature of the pixel i, the greater a value of $f_{in}$ is, the higher the confidence level of the initially estimated disparity value of the pixel i shown on the n-th confidence feature is, and the pixel i is voted for when the value of $f_{in}$ is greater than a predetermined threshold; and

obtaining the total votes $\sum_n f_{in}$ of the pixel i serving as said score $r_i$ of the confidence level of the initially estimated disparity value of the pixel i.

7. A system for performing stereo matching, the system comprising: a photographing apparatus (100) configured to photograph a first image and a second image; and a controller (101) according to claim 6 and configured to receive the first image and the second image sent by the photographing apparatus.

**Patentansprüche**

1. Verfahren (200) zum Durchführen eines Stereoabgleichs, wobei das Verfahren enthält:

Berechnen (201) von Abgleichkosten zwischen Pixeln eines ersten Bilds und Pixeln eines zweiten Bilds;

Schätzen (202) initialer Disparitätswerte (2021) und entsprechender Werte von Konfidenzniveaus (2022) der Pixel eines des ersten Bilds und des zweiten Bilds, das als Referenzbild dient, wobei der Wert $r_i$ des Konfidenzniveaus des Pixels i ein gesamtes Konfidenzniveau ist, das anzeigt, ob der initiale Disparitätswert des Pixels richtig ist;

Berechnen (203), basierend auf eines Unterschiedsgrads eines visuellen Merkmals und eines Abstands in einem Bildkoordinatensystem zwischen zwei Pixeln in dem Referenzbild und basierend auf den Werten der den zwei Pixeln entsprechenden Konfidenzniveaus, gerichteter Energiefortpflanzungskoeffizienten zwischen den zwei Pixeln; und

Durchführen (204), basierend auf den gerichteten Energiefortpflanzungskoeffizienten, eines Erwartungsfortpflanzungsalgorithmus', um aktualisierte Disparitätswerte der Pixel zu erhalten,

wobei der gerichtete Energiefortpflanzungskoeffizient zu dem anderen Pixel der genannten zwei Pixel für jedes Pixel der genannten zwei Pixel einen Betrag an Energie von Informationen, die von dem genannten Pixel zu dem anderen Pixel fortgepflanzt werden, wenn der genannte Erwartungsfortpflanzungsalgorithmus ausgeführt wird, repräsentieren, wodurch die genannte Erwartungsfortpflanzung zwischen den genannten zwei Pixeln in asymmetrischer Weise durchgeführt werden kann,

wobei das Schätzen (202) der initialen Disparitätswerte und der entsprechenden Werte der Konfidenzniveaus der Pixel von einem des ersten Bilds und des zweiten Bilds, das als das Referenzbild dient, enthält, dass basierend auf den berechneten Abgleichkosten Punkte mit optimalen Abgleichkosten in einem bestimmten Bereich, die als entsprechende Abgleichpunkte dienen, ausgewählt werden;

initiale Disparitätswerte der Abgleichpunkte geschätzt werden; und
die entsprechenden Werte der Konfidenzniveaus unter Verwendung eines auf einer Regel basierenden Algorithmus' berechnet werden,

**dadurch gekennzeichnet, dass**
der auf der Regel basierende Algorithmus enthält, dass die genannten Werte des Konfidenzniveaus, die den genannten initialen Schätzungen für die genannten Disparitätswerte entsprechen, durch folgendes erhalten werden:

Extrahieren von Konfidenzmerkmalen einer Kurve der Abgleich kostenbasierend auf jedem Pixel und benachbarten Pixeln des Pixels;
Bewerten der Pixel, wobei $f_{in}$ ein n-tes Konfidenzmerkmal des Pixels i ist, je größer ein Wert von $f_{in}$ ist, desto höher das Konfidenzniveau des initial geschätzten Disparitätswerts des Pixels i, das auf dem n-ten Konfidenzmerkmal gezeigt wird, ist und das Pixel i bewertet wird, wenn der Wert von $f_{in}$ größer als ein vorbestimmter Schwellwert ist; und
Erhalten der Gesamtbewertungen $\sum_n f_{in}$ des Pixels i, die als der genannte Wert $r_i$ des Konfidenzniveaus des initial geschätzten Disparitätswerts des Pixels i dient.

2. Verfahren (200) zum Durchführen eines Stereoabgleichs gemäß Anspruch 1,
wobei das Berechnen (203), basierend auf dem Unterschiedsgrad der visuellen Merkmale und dem Abstand in dem Bildkoordinatensystem zwischen den zwei Pixeln in dem Referenzbild und der den zwei Pixeln entsprechenden Konfidenzniveaus, der gerichteten Energiefortpflanzungskoeffizienten zwischen den zwei Pixeln enthält, dass

für jeweils zwei Pixel in dem Referenzbild ein Differenzwert des visuellen Merkmals und des Abstands in dem Referenzbild zwischen den zwei Pixeln berechnet wird; und
der Energiefortpflanzungskoeffizient von einem Pixel zu einem anderen Pixel und der Energiefortpflanzungskoeffizient von dem anderen Pixel zu dem einen Pixel basierend auf dem Unterschiedsgrad des visuellen Merkmals und des Abstands in dem Bildkoordinatensystem zwischen den zwei Pixeln und dem Konfidenzniveaus der Pixel berechnet wird.

3. Verfahren (200) zum Durchführen eines Stereoabgleichs gemäß Anspruch 1,
wobei das Durchführen (204), basierend auf den gerichteten Energiefortpflanzungskoeffizienten, des Erwartungsfortpflanzungsalgorithmus' zum Erhalten der aktualisierten Disparitätswerte des Pixels enthält, dass

ein gerichtetes Grafenmodell konstruiert wird, in dem die Knoten die Pixel in dem Referenzbild sind und Gewichte der gerichteten Verbindungen zwischen den Knoten die Energiefortpflanzungskoeffizienten sind, so dass eine Fortpflanzungswahrscheinlichkeitsmatrix konstruiert wird;
basierend auf der Fortpflanzungswahrscheinlichkeitsmatrix wird ein Zufallsbewegungsmodell definiert, das eine einzigartige stabile Verteilung aufweist;
basierend auf einer Diagonalmatrix, in der Diagonalelemente die stabile Verteilung des Zufallsbewegungsmodells sind, wird die Fortpflanzungswahrscheinlichkeitsmatrix berechnet; und
basierend auf der berechneten Fortpflanzungswahrscheinlichkeitsmatrix und den geschätzten Disparitätswerten wird eine abschließende Disparitätsberechnungsfunktion erhalten, so dass die aktualisierten Disparitätswerte erhalten werden.

4. Verfahren (200) zum Durchführen eines Stereoabgleichs gemäß Anspruch 3, bei dem $w_{ij}$ einen initialen Energiefortpflanzungskoeffizienten zwischen einem Pixel i und einem Pixel j repräsentiert,

$$w_{ij} = \exp\left(-\left(\frac{\Delta c(i,j)}{\lambda_c} + \frac{\Delta g(i,j)}{\lambda_g}\right)\right)$$

wobei $\Delta c(i,j) = \|I(i) - I(j)\|$ und $\Delta g(i,j) = \|i - j\|$ den Unterschiedsgrad des visuellen Merkmals bzw. den Abstand in dem Bildkoordinatensystem zwischen dem Pixel i und dem Pixel j repräsentiert und and $\lambda_c$ und $\lambda_g$ zwei Regularisierungsparameter sind und $r_i$ einen Wert des Konfidenzniveaus des Pixels i repräsentiert, je höher der Wert des Konfidenzniveaus ist, desto höher die Wahrscheinlichkeit ist, die anzeigt, ob der geschätzte Disparitätswert richtig ist, und der Energiefortpflanzungskoeffizient $p_{ij}$ durch $p_{ij} = <r_i,w_{ij}>$, wobei $<r_i,w_{ij}>$ ein inneres Produkt des Werts des Konfidenzniveaus $r_i$ und des initialen Energiefortpflanzungskoeffizienten $w_{ij}$ repräsentiert.

5. Verfahren (200) zum Durchführen eines Stereoabgleichs gemäß Anspruch 3, wobei die Fortpflanzungswahrscheinlichkeitsmatrix $\Theta$ basierend auf der Diagonalmatrix $\Pi$ berechnet wird, wobei die Diagonalelemente eine stabile Verteilung des Zufallsbewegungsmodells sind,

$$\Theta = \left(\Pi^{1/2}P\Pi^{-1/2} + \Pi^{-1/2}P\Pi^{1/2}\right)/2$$

wobei P ein eine Energiefortpflanzungskoeffizientenmatrix ist, wenn y den geschätzten Disparitätswert repräsentiert, die abschließende Disparitätsberechnungsfunktion $f = (I - \alpha\Theta^{-1}y$ ist, wobei $\alpha$ ein Parameter ist, der im Intervall [0,1] liegt.

6. Steuereinrichtung (101) zum Durchführen eines Stereoabgleichs, wobei die Steuereinrichtung (101) enthält:

einen Abgleichkostenberechnungsapparat, der eingerichtet ist, Abgleichkosten zwischen Pixeln eines ersten Bilds und Pixeln eines zweiten Bilds zu berechnen;
einen Schätzapparat, der eingerichtet ist, initiale Disparitätswerte und entsprechende Werte der Konfidenzniveaus der Pixel von einem des ersten Bilds und des zweiten Bilds, das als eine Referenzbild dient, zu schätzen, wobei der Wert $r_i$ des Konfidenzniveaus ein Gesamtkonfidenzniveau ist, das anzeigt, ob der geschätzte initiale Disparitätswert des Pixels richtig ist;
einen Energiefortpflanzungskoeffizientenberechnungsapparat, der eingerichtet ist, basierend auf einem Unterschiedsgrad eines visuellen Merkmals und eines Abstands in einem Bildkoordinatensystem zwischen zwei Pixel in einem Referenzbild und den Werten der den zwei Pixel entsprechenden Konfidenzniveaus gerichtete Energiefortpflanzungskoeffizienten zwischen den zwei Pixeln zu berechnen;
einen Disparitätswertgewinnungsapparat, der eingerichtet ist, basierend auf den gerichteten Energiefortpflanzungskoeffizienten einen Erwartungsfortpflanzungsalgorithmus durchzuführen, um aktualisierte Disparitätswerte der Pixel zu erhalten,
wobei der gerichtete Energiefortpflanzungskoeffizient zu dem anderen Pixel der genannten zwei Pixel für jedes Pixel der genannten zwei Pixel einen Betrag an Energie von Informationen repräsentiert, die von dem genannten Pixel zu dem anderen Pixel fortgepflanzt wurden, wenn der genannte Erwartungsfortpflanzungsalgorithmus ausgeführt wird, wodurch die genannte Erwartungsfortpflanzung zwischen den genannten zwei Pixeln in asymmetrischer Weise durchgeführt werden kann,
wobei das Schätzen (202) des initialen Disparitätswerts und der entsprechenden Werte der Konfidenzniveaus der Pixel von einem des ersten Bilds und des zweiten Bilds, das als das Referenzbild dient, enthält, dass basierend auf den berechneten Abgleichkosten Punkte mit optimalen Abgleichkosten in einem bestimmten Bereich, die als entsprechende Abgleichpunkte dienen, ausgewählt werden;

initiale Disparitätswerte der Abgleichpunkte geschätzt werden; und
die entsprechenden Werte der Konfidenzniveaus unter Verwendung eines auf einer Regel basierenden Algorithmus' berechnet werden,

**dadurch gekennzeichnet, dass**

der auf der Regel basierende Algorithmus enthält, dass die genannten Werte des Konfidenzniveaus, die den genannten initialen Schätzungen für die genannten Disparitätswerte entsprechen, durch folgendes erhalten werden:

Extrahieren von Konfidenzmerkmalen einer Kurve der Abgleich kostenbasierend auf jedem Pixel und benachbarten Pixeln des Pixels;

Bewerten der Pixel, wobei $f_{in}$ ein n-tes Konfidenzmerkmal des Pixels i ist, je größer ein Wert von $f_{in}$ ist, desto höher das Konfidenzniveau des initial geschätzten Disparitätswerts des Pixels i, das auf dem n-ten Konfidenzmerkmal gezeigt wird, ist und das Pixel i bewertet wird, wenn der Wert von $f_{in}$ größer als ein vorbestimmter Schwellwert ist; und

Erhalten der Gesamtbewertungen $\sum_n f_{in}$ des Pixels i, die als der genannte Wert $r_i$ des Konfidenzniveaus des initial geschätzten Disparitätswerts des Pixels i dient.

7. System zum Durchführen eines Stereoabgleichs, wobei das System enthält: einen Fotografieapparat (100), der eingerichtet ist, ein erstes Bild und ein zweites Bild zu fotografieren; und eine Steuereinrichtung, (101) gemäß Anspruch 6, die eingerichtet ist, das erste Bild und das zweite Bild, die von dem Fotografieapparat gesandt worden sind, zu empfangen.

## Revendications

1. Procédé (200) pour réaliser un appariement stéréo, le procédé comprenant :

le calcul (201) de coûts d'appariement entre des pixels d'une première image et des pixels d'une seconde image ;

l'estimation (202) de valeurs de disparité initiales (2021) et de notes correspondantes de niveaux de confiance (2022) des pixels d'une de la première image et de la seconde image servant d'image de référence, la note $r_i$ du niveau de confiance de pixel i étant un niveau de confiance totale qui indique si la valeur de disparité initiale estimée du pixel i est correcte ;

le calcul (203), sur la base d'un degré de différence d'une caractéristique visuelle et d'une distance dans un système de coordonnées d'image entre deux pixels dans l'image de référence, et, sur la base des notes des niveaux de confiance correspondant aux deux pixels, de coefficients orientés de propagation d'énergie entre les deux pixels ; et

la réalisation (204), sur la base des coefficients orientés de propagation d'énergie, d'un algorithme de propagation de croyance pour obtenir des valeurs de disparité mises à jour des pixels,

dans lequel, pour chaque pixel desdits deux pixels, le coefficient orienté de propagation d'énergie jusqu'à l'autre pixel desdits deux pixels représente une quantité d'énergie d'informations propagée depuis ledit pixel jusqu'à l'autre pixel lors de la réalisation dudit algorithme de propagation de croyance, moyennant quoi ladite propagation de croyance entre lesdits deux pixels peut être réalisée de manière asymétrique,

dans lequel l'estimation (202) des valeurs de disparité initiales et des notes correspondantes des niveaux de confiance des pixels d'une de la première image et de la seconde image servant d'image de référence inclut la sélection, sur la base des coûts d'appariement calculés, de points avec un coût d'appariement optimal dans une certaine plage servant de points d'appariement correspondants ;

l'estimation de valeurs de disparité initiales des points d'appariement ; et

le calcul des notes correspondantes des niveaux de confiance en utilisant un algorithme sur la base d'une règle, **caractérisé en ce que**

l'algorithme sur la base de la règle inclut l'obtention desdites notes des niveaux de confiance correspondant auxdites estimations initiales pour lesdites valeurs de disparité par l'intermédiaire de :

l'extraction, sur la base de chaque pixel et de pixels adjacents du pixel, de caractéristiques de confiance d'une courbe des coûts d'appariement ;

le choix par vote sur les pixels, dans lequel $f_{in}$ est une n-ième caractéristique de confiance du pixel i, plus une valeur de $f_{in}$ est importante, plus le niveau de confiance de la valeur de disparité estimée initialement du pixel i présenté sur la n-ième caractéristique de confiance est élevé, et le pixel i est choisi par vote lorsque la valeur de $f_{in}$ est supérieure à un seuil prédéterminé ; et

l'obtention des votes totaux $\sum_n f_{in}$ du pixel i servant de dite note $r_i$ du niveau de confiance de la valeur de disparité estimée initialement du pixel i.

**2.** Procédé (200) pour réaliser un appariement stéréo selon la revendication 1, dans lequel le calcul (203), sur la base du degré de différence de la caractéristique visuelle et de la distance dans le système de coordonnées d'image entre les deux pixels dans l'image de référence, et des niveaux de confiance correspondant aux deux pixels, des coefficients orientés de propagation d'énergie entre les deux pixels inclut

pour chaque paire de pixels dans l'image de référence, le calcul d'une valeur de différence de la caractéristique visuelle et de la distance dans l'image de référence entre la paire de pixels ; et le calcul, sur la base du degré de différence de la caractéristique visuelle et de la distance dans le système de coordonnées d'image entre les deux pixels, et des niveaux de confiance des pixels, du coefficient de propagation d'énergie depuis un pixel jusqu'à un autre pixel, et du coefficient de propagation d'énergie depuis l'autre pixel jusqu'à l'un pixel.

**3.** Procédé (200) pour réaliser un appariement stéréo selon la revendication 1, dans lequel la réalisation (204), sur la base des coefficients orientés de propagation d'énergie, de l'algorithme de propagation de croyance pour obtenir les valeurs de disparité mises à jour des pixels inclut

la construction d'un modèle de graphe orienté où des nœuds sont les pixels dans l'image de référence et des poids de connexions dirigées entre les nœuds sont les coefficients de propagation d'énergie, pour qu'une matrice de vraisemblance de propagation soit construite ;
la définition, sur la base de la matrice de vraisemblance de propagation, d'un modèle de cheminement aléatoire ayant une unique stable distribution ;
le calcul, sur la base d'une matrice diagonale où des éléments diagonaux sont la distribution stable du modèle de cheminement aléatoire, de la matrice de vraisemblance de propagation ; et
l'obtention, sur la base de la matrice de vraisemblance de propagation calculée et des valeurs de disparité estimées, d'une fonction de calcul de disparité finale, pour que les valeurs de disparité mises à jour soient obtenues.

**4.** Procédé (200) pour réaliser un appariement stéréo selon la revendication 3, dans lequel $w_{ij}$ représente un coefficient de propagation d'énergie initiale entre un pixel i et un pixel j,

$$w_{ij} = \exp\left(-\left(\frac{\Delta c(i,j)}{\lambda_c} + \frac{\Delta g(i,j)}{\lambda_g}\right)\right)$$

où $\Delta c(i,j) = \|I(i) - I(j)\|$ et $\Delta g(i,j) = \|i - j\|$ représentent le degré de différence de la caractéristique visuelle et la distance dans le système de coordonnées d'image entre le pixel i et le pixel j, respectivement, et $\lambda_c$ et $\lambda_g$ sont deux paramètres de régularisation, et
$r_i$ représente une note du niveau de confiance du pixel i, plus la note du niveau de confiance est élevée, plus la vraisemblance qui indique si la valeur de disparité estimée est correcte est élevée, et le coefficient de propagation d'énergie $p_{ij}$ est représenté par $p_{ij} = <p_{ij}, w_{ij}>$, où $<r_{ij}, w_{ij}>$ représente un produit intérieur de la note du niveau de confiance $r_i$ et du coefficient de propagation d'énergie initiale $w_{ij}$.

**5.** Procédé (200) pour réaliser un appariement stéréo selon la revendication 3,
dans lequel la matrice de vraisemblance de propagation $\Theta$ est calculée sur la base de la matrice diagonale $\Pi$ où des éléments diagonaux sont la distribution stable du modèle de cheminement aléatoire,

$$\Theta = (\Pi^{1/2} \Pi P^{-1/2} + \Pi^{-1/2} P \Pi^{1/2})/2$$

où P est une matrice de coefficient de propagation d'énergie,
lorsque y représente la valeur de disparité estimée, la fonction de calcul de disparité finale est $f = (I - \alpha\Theta)^{-1}y$, où $\alpha$ est un paramètre dont la gamme est [0,1].

**6.** Unité de commande (101) pour réaliser un appariement stéréo, l'unité de commande (101) comprenant :

un appareil de calcul de coût d'appariement configuré pour calculer des coûts d'appariement entre des pixels d'une première image et des pixels d'une seconde image ;
un appareil d'estimation configuré pour estimer des valeurs de disparité initiales et des notes correspondantes des niveaux de confiance des pixels d'une de la première image et de la seconde image servant d'image de référence, la note $r_i$ du niveau de confiance étant un niveau de confiance totale qui indique si la valeur de disparité initiale estimée du pixel i est correcte ;

un appareil de calcul de coefficient de propagation d'énergie configuré pour calculer, sur la base d'un degré de différence d'une caractéristique visuelle et d'une distance dans un système de coordonnées d'image entre deux pixels dans l'image de référence, et des notes des niveaux de confiance correspondant aux deux pixels, des coefficients orientés de propagation d'énergie entre les deux pixels ; et

un appareil d'obtention de valeur de disparité configuré pour réaliser, sur la base des coefficients orientés de propagation d'énergie, un algorithme de propagation de croyance pour obtenir des valeurs de disparité mises à jour des pixels,

dans laquelle, pour chaque pixel desdits deux pixels, le coefficient orienté de propagation d'énergie jusqu'à l'autre pixel desdits deux pixels représente une quantité d'énergie d'informations propagée depuis ledit pixel jusqu'à l'autre pixel lors de la réalisation dudit algorithme de propagation de croyance, moyennant quoi ladite propagation de croyance entre lesdits deux pixels peut être réalisée de manière asymétrique,

dans laquelle l'estimation (202) des valeurs de disparité initiales et des notes correspondantes des niveaux de confiance des pixels d'une de la première image et de la seconde image servant d'image de référence inclut

la sélection, sur la base des coûts d'appariement calculés, de points avec un coût d'appariement optimal dans une certaine plage servant de points d'appariement correspondants ;

l'estimation de valeurs de disparité initiales des points d'appariement ; et

le calcul des notes correspondantes des niveaux de confiance en utilisant un algorithme sur la base d'une règle, **caractérisé en ce que**

l'algorithme sur la base de la règle inclut l'obtention desdites notes des niveaux de confiance correspondant auxdites estimations initiales pour lesdites valeurs de disparité par l'intermédiaire de :

> l'extraction, sur la base de chaque pixel et de pixels adjacents du pixel, de caractéristiques de confiance d'une courbe des coûts d'appariement ;
>
> le choix par vote sur les pixels, dans laquelle $f_{in}$ est une n-ième caractéristique de confiance du pixel i, plus une valeur de $f_{in}$ est importante, plus le niveau de confiance de la valeur de disparité estimée initialement du pixel i représenté sur la n-ième caractéristique de confiance est élevé, et le pixel i est choisi par vote lorsque la valeur de $f_{in}$ est supérieure à un seuil prédéterminé ; et
>
> l'obtention des votes totaux $\Sigma_n f_{in}$ du pixel i servant de dite note $r_i$ du niveau de confiance de la valeur de disparité estimée initialement du pixel i.

**7.** Système pour réaliser un appariement stéréo, le système comprenant : un appareil de photographie (100) configuré pour photographier une première image et une seconde image ; et une unité de commande (101) selon la revendication 6 et configurée pour recevoir la première image et la seconde image envoyées par l'appareil de photographie.

# FIG.1

STEREO MATCHING METHOD

LEFT IMAGE 102(1)

RIGHT IMAGE 102(2)

100

101

FINAL DISPARITY MAP

EP 3 182 369 B1

# FIG.2

CORRECTED LEFT IMAGE AND RIGHT IMAGE

MATCHING COST
CALCULATION — 201

ESTIMATION OF
INITIAL DISPARITY MAP — 202

2021 — INITIAL
DISPARITY MAP

SCORE OF
CONFIDENCE LEVEL — 2022

ENERGY PROPAGATION
COEFFICIENT DETERMINATION — 203

PERFORM BELIEF
PROPAGATION USING ENERGY
PROPAGATION COEFFICIENT
UNTIL IT BECOMES STABLE — 204

DISPARITY MAP

200

# FIG.3A

ANOTHER
PIXEL

ENERGY
PROPAGATION
COEFFICIENT

SEED POINT

18

# FIG.3B

DIFFERENT
PROCESSING

1 AND 2 : SEED POINTS
3 : PIXEL TO BE PROPAGATED

# FIG.3C

ASYMMETRICAL

PROPAGATION FROM
SEED POINT 1 TO PIXEL 2

PROPAGATION FROM
SEED POINT 2 TO PIXEL 1

# FIG.4

INITIAL
DISPARITY VALUES

SCORES OF
CONFIDENCE LEVEL

ASYMMETRICAL ENERGY
PROPAGATION COEFFICIENTS

BELIEF PROPAGATION IN
DIRECTED GRAPH MODEL

EP 3 182 369 B1

# FIG.5

500

501
MATCHING COST
CALCULATING
APPARATUS

502
ESTIMATING
APPARATUS

503
ENERGY PROPAGATION
COEFFICIENT
CALCULATING
APPARATUS

504
DISPARITY VALUE
OBTAINING APPARATUS

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **XUEQIN XIANG et al.** Real-time stereo matching based on fast belief propagation. *MACHINE VISION AND APPICATIONS, SPRINGER,* 13 January 2012, vol. 23, ISSN 1432-1769, 1219-1227
- **HEUNG-YEUNG SHUM et al.** Stereo matching using belief propagation. *IEEE PAMI,* July 2003, vol. 25 (7), ISSN 0162-8828, 787-800
- A Quantitative Evaluation of Confidence Measures for Stereo Vision. **XIAOYAN HU et al.** IEEE TRANS-ACTIONS ON PATTERN ANALYSIS AND MA-CHINE INTELLEGENCE. IEEE COMPUTER SOCI-ETY, 01 November 2012, vol. 34, 2121-2133
- **SEHYUNG LEE et al.** Robust stereo matching using adaptive random walk with restart algorithm. *IMAGE AND VISION COMPUTING,* 01 May 2015, vol. 37, 1-11
- **KUK-JIN YOON et al.** Adaptive support-weight approach for correspondence search. *IEEE Transactions on Pattern Analysis and Machine Intelligence,* 01 January 2006, 650-656
- **X.HU, P.MORDOHAI.** A quantitative evaluation of confidence measures for stereo vision. *PAMI,* 2012, vol. 34, 2121-2133
- **D. ZHOU ; J. HUANG ; B. SCHOLKOPF.** Learning from Labeled and Unlabeled Data on a Directed Graph. *ICML,* 2005